# EUROPEAN PATENT APPLICATION

(11) **EP 2 521 042 A1**
(43) Date of publication of application: **07.11.2012**
(21) Application number: 10840501.0
(22) Date of filing: 14.12.2010
(51) Int. Cl.: G06F 15/16

(54) **METHOD AND SYSTEM FOR MEDIA PLAYING CONTENT DELIVERY NETWORK DEVICE AND ADVERTISEMENT SERVER**

(30) Priority: 31.12.2009 CN 200910216928
(71) Applicant: Huawei Technologies Co., Ltd., Shenzhen, Guangdong 518129 (CN)
(72) Inventor: OU, Xiongbing, Shenzhen Guangdong 518129 (CN); WU, Xiangyang, Shenzhen Guangdong 518129 (CN); YAN, Jun, Shenzhen Guangdong 518129 (CN); FENG, Jiangping, Shenzhen Guangdong 518129 (CN); FANG, Xin, Shenzhen Guangdong 518129 (CN)
(74) Representative: Haley, Stephen
(86) International application number: PCT/CN2010/079758
(87) International publication number: WO 2011/079712

(57) **Abstract**

The present invention discloses a media playback method and system, a content delivery network device, and an advertising server. The method includes: receiving, by a content delivery network device, a program playback request sent by a user terminal; if the program playback request carries a user identifier of a user in the content delivery network device, querying, by the content delivery network device, a corresponding relation between the user identifier and personalized information according to the user identifier to obtain the personalized information of the user; obtaining, by the content delivery network device, a link of advertisement content that corresponds to the user from an advertising server, where the link of the advertisement content is obtained by the advertising server according to the personalized information of the user and a preset advertisement configuration policy; and sending, by the content delivery network device or the advertising server, advertisement content corresponding to the link of the advertisement content to the user terminal. The personalized information of the user obtained in the embodiments of the present invention is more comprehensive, so that the advertisement content obtained according to the personalized information of the user in the embodiments of the present invention is more accurate, thereby improving a delivery effect of a personalized advertisement.

## Description

This application claims priority to Chinese Patent Application No. 200910216928.2, filed with the Chinese Patent Office on December 31, 2009 and entitled "MEDIA PLAYBACK METHOD AND SYSTEM, CONTENT DELIVERY NETWORK DEVICE, AND ADVERTISING SERVER", which is incorporated herein by reference in its entirety.

### FIELD OF THE INVENTION

The present invention relates to the field of media services, and in particular, to a media playback method and system, a content delivery network device, and an advertising server.

### BACKGROUND OF THE INVENTION

With the popularization of the Internet, network video services using a personal computer or a set-top box with a television as a terminal develop rapidly, with which a user may demand a desired video over the Internet. As an emerging manner of providing services, the network video may publish video content to a wider user space.

In an existing network video service, when a video is played, a personalized advertisement may be played to a user based on a bidirectional feature of Internet Protocol (IP, Internet Protocol) transmission. Compared with a conventional broadcast advertisement, the personalized advertisement is better targeted, thereby improving service experience of the user.

In the prior art, a playlist (Playlist) file is usually used to insert an advertisement in a video. The playlist file is located in a network side server. A terminal accesses the network side server to obtain the playlist file, requests a server for an advertisement or a video program according to a program schedule in the playlist file, and shows the advertisement or video program to the user. The network side server deduces a preference of the user according to an access record of the user accessing the server, so as to obtain personalized information of the user.

During the research on the prior art, the inventors find that in the existing media playback method, only the personalized information during the access of the server is able to be obtained, thereby resulting in an inaccurate analysis on preference information of the user and an undesirable delivery effect of a personalized advertisement.

### SUMMARY OF THE INVENTION

The present invention provides a media playback method and system, a content delivery network device and an advertising server, so as to accurately obtain preference information of a user and play an advertisement to the user according to preference information of the user.

A media playback method provided by an embodiment of the present invention includes:
receiving, by a content delivery network device, a program playback request sent by a user terminal;
when the program playback request carries a user identifier of a user in the content delivery network device, querying, by the content delivery network device, a corresponding relation between the user identifier and personalized information according to the user identifier to obtain the personalized information of the user;
obtaining, by the content delivery network device, a link of advertisement content that corresponds to the user from an advertising server, where the link of the advertisement content is obtained by the advertising server according to the personalized information of the user and a preset advertisement configuration policy; and
sending, by the content delivery network device or the advertising server, the advertisement content corresponding to the link of the advertisement content to the user terminal.

A media playback method provided by an embodiment of the present invention includes:
receiving, by an advertising server, an advertisement playback request sent by a user terminal, where the advertisement playback request carries an IP address of the user terminal;
sending, by the advertising server, a personalized information query request to a content delivery network device, where the personalized information query request carries the IP address of the user terminal;
receiving, by the advertising server, personalized information of a user sent by the content delivery network device, where the personalized information of the user is obtained by the content delivery network device according to the IP address of the user terminal;
obtaining, by the advertising server according to the personalized information of the user and a preset advertisement policy, a link of advertisement content that corresponds to the user, and sending the link of the advertisement content to the user terminal; and
receiving, by the advertising server or the content delivery network device, the advertisement playback request sent by the user terminal, and sending advertisement content corresponding to the link of the advertisement content to the user terminal, where the advertisement playback request carries the link of the advertisement content.

A media playback method provided by an embodiment of the present invention includes:
receiving, by an advertising server, an advertisement content query request sent by an ingress device, where the advertisement content query request carries a user identifier of a user;
sending, by the advertising server, a personalized information query request to a content delivery network device, where the personalized information query request carries the user identifier;
receiving, by the advertising server, personalized information of the user returned by the content delivery network device, where the personalized information is obtained by the content delivery network device by querying a corresponding relation between the user identifier and the personalized information according to the user identifier;
obtaining, by the advertising server, a link of advertisement content according to the personalized information of the user and a preset advertisement policy, and sending the link of the advertisement content to a user terminal through the ingress device; and
receiving, by the advertising server or the content delivery network device, an advertisement playback request sent by the user terminal, and sending advertisement content corresponding to the link to the user terminal, where the advertisement playback request carries the link of the advertisement content.

A content delivery network device provided by an embodiment of the present invention includes:
a first obtaining unit, configured to obtain a user identifier of a user terminal; and
a personalized information obtaining unit, configured to query a corresponding relation between the user identifier and personalized information according to the user identifier of the user terminal to obtain the personalized information of a user, and send the personalized information of the user to an advertising server, so that the advertising server obtains a link of an advertisement content according to the personalized information of the user and a preset advertisement policy.

An advertising server provided by an embodiment of the present invention includes:
a personalized information query unit, configured to send a personalized information query request to a content delivery network device, where the personalized information query request carries an IP address of a user terminal or a user identifier;
a personalized information receiving unit, configured to receive personalized information of a user sent by the content delivery network device, where the personalized information of the user is obtained by the content delivery network device according to the IP address of the user terminal or the user identifier; and
an advertisement link obtaining unit, configured to obtain, according to the personalized information of the user and a preset advertisement policy, a link of advertisement content that corresponds to the user.

A media playback system provided by an embodiment of the present invention includes an advertising server and a content delivery network device.

The advertising server is configured to send a personalized information query request to the content delivery network device, where the personalized information query request carries an IP address of a user terminal or a user identifier.

The content delivery network device obtains personalized information of a user according to the IP address of the user terminal or the user identifier.

The advertising server is configured to receive the personalized information of the user sent by the content delivery network device, and obtain, according to the personalized information of the user and a preset advertisement policy, a link of advertisement content that corresponds to the user.

The advertising server or the content delivery network device sends advertisement content corresponding to the link to the user terminal.

In the embodiments of the present invention, as the content delivery network device may provide media content acceleration for multiple media servers, and the user always has the same user identifier in the content delivery network device, the personalized information in the content delivery network device may include personalized information when the user accesses the multiple media servers. Compared with the prior art, the personalized information of the user provided by the embodiments of the present invention is more comprehensive, so that the advertisement content obtained according to the personalized information of the user in the embodiments of the present invention is more accurate, thereby improving a delivery effect of a personalized advertisement.

### BRIEF DESCRIPTION OF THE DRAWINGS

To illustrate the technical solutions according to the embodiments of the present invention more clearly, the accompanying drawings for describing the embodiments are introduced briefly in the following. Apparently, the accompanying drawings in the following description are only some embodiments of the present invention, and persons of ordinary skill in the art can derive other drawings from the accompanying drawings without creative efforts.

FIG. 1 is a flow chart of a media playback method according to a first embodiment of the present invention;

FIG. 2 is a flow chart of a method for updating personalized information of a user according to personalized operation information of playing a program by a user terminal according to an embodiment of the present invention;

FIG. 3 is a flow chart of a method for obtaining a user identifier according to an embodiment of the present invention;

FIG. 4 is a flow chart of a method for updating personalized information of a user according to personalized operation information of playing advertisement content by a user terminal according to an embodiment of the present invention;

FIG. 5 is a flow chart of a media playback method according to a second embodiment of the present invention;

FIG. 6 is a flow chart of a media playback method according to a third embodiment of the present invention;

FIG. 7 is a flow chart of a method for sending a link of advertisement content to a user terminal through an ingress device according to the third embodiment of the present invention;

FIG. 8 is a flow chart of a media playback method according to a fourth embodiment of the present invention;

FIG. 9 is a flow chart of a media playback method according to a fifth embodiment of the present invention;

FIG. 10 is a flow chart of a media playback method according to a sixth embodiment of the present invention;

FIG. 11 is a schematic structural diagram of a content delivery network device according to a seventh embodiment of the present invention;

FIG. 12 is a schematic structural diagram of an advertising server according to an eighth embodiment of the present invention; and

FIG. 13 is a schematic structural diagram of a media playback system according a ninth embodiment of the present invention.

### DETAILED DESCRIPTION OF THE EMBODIMENTS

The present invention provides a media playback method and system, a content delivery network device, and an advertising server. The technical solutions of the present invention will be clearly and completely described in the following with reference to the accompanying drawings. It is obvious that the embodiments to be described are only a part rather than all of the embodiments of the present invention. All other embodiments obtained by persons of ordinary skill in the art based on the embodiments of the present invention without creative efforts shall fall within the protection scope of the present invention.

A content delivery network (CDN, Content Delivery Network) technology may publish content of a Web site to a network edge closest to a terminal by adding a new layer of network architecture in the existing Internet, so that a user may obtain desired content nearby, thereby increasing a response speed of the Web site visited by the user. In the embodiments of the present invention, a user may visit different Web sites through a content delivery network, so as to perform a Web page browsing service or a video service.

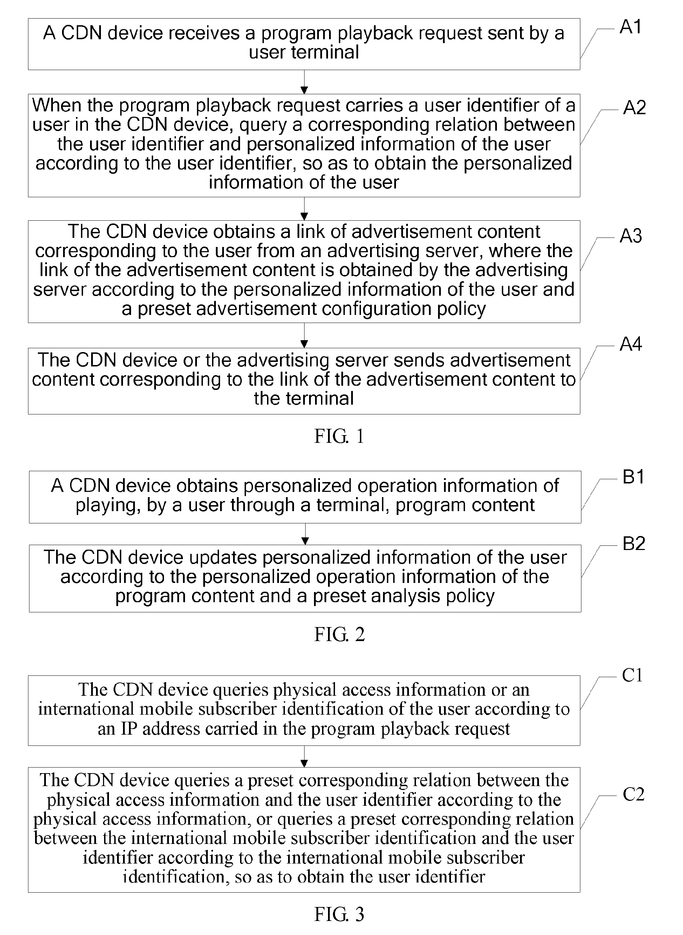

Referring to FIG. 1, FIG. 1 is a flow chart of a media playback method according to a first embodiment of the present invention.

The media playback method provided by the first embodiment of the present invention may include:

A1. A CDN device receives a program playback request sent by a user terminal.

Specifically, in this embodiment of the present invention, the CDN device may receive the program playback request sent by the user terminal.

A2. When the program playback request carries a user identifier of a user in the CDN device, query a corresponding relation between the user identifier and personalized information of the user according to the user identifier, so as to obtain the personalized information of the user.

Specifically, in this embodiment of the present invention, the user identifier of the user in the CDN device may be a Cookie identifier, and may definitely be other information capable of identifying an identity of the user, for example, a terminal identifier (Terminal ID). The user identifier is an identifier allocated when the user accesses the Internet through the content delivery network for the first time. The user may carry the user identifier during subsequent access to the Internet through the content delivery network.

A corresponding relation exists between the personalized information of the user and the user identifier. The personalized information may include an advertisement preference of the user, personal information of the user, and so on, and the advertisement preference may be an advertisement type, advertisement content, and so on. The personalized information of the user may be collected when the user subscribes to an Internet service, and may also be collected when the user accesses the Internet.

Furthermore, in this embodiment of the present invention, a preset corresponding relation between the user identifier and the personalized information of the user is queried according to the user identifier, so as to obtain the personalized information of the user. For the corresponding relation, when the user accesses the Internet for the first time, the personalized information of the user may be obtained, and the corresponding relation between the personalized information of the user and the user identifier may be established.

A3. The CDN device obtains a link of advertisement content that corresponds to the user from an advertising server, where the link of the advertisement content is obtained by the advertising server according to the personalized information of the user and a preset advertisement configuration policy.

Specifically, in this embodiment of the present invention, the CDN device obtains the link of the advertisement content that corresponds to the user from the advertising server. The link of the advertisement content is obtained by the advertising server according to the personalized information of the user and the preset advertisement configuration policy.

A destination address of the link of the advertisement content may be the advertising server or the CDN device.

A4. The CDN device or the advertising server sends advertisement content corresponding to the link of the advertisement content to the terminal.

Specifically, when the destination address of the link of the advertisement content is the CDN device, in this embodiment of the present invention, the CDN device sends the advertisement content corresponding to the link of the advertisement content to the terminal, so as to provide an advertisement service for the terminal. When the destination address of the link of the advertisement content is the advertising server, the advertising server sends the advertisement content corresponding to the link of the advertisement content to the terminal, so as to provide the advertisement service for the terminal.

In this embodiment of the present invention, as the CDN device may provide media content acceleration for multiple media servers, and the user always has the same user identifier in the CDN device, the personalized information in the CDN device may include personalized information when the user accesses the multiple media servers. Compared with the prior art, the personalized information of the user provided by this embodiment of the present invention is more comprehensive, so that the advertisement content obtained according to the personalized information of the user in this embodiment of the present invention is more accurate, thereby improving a delivery effect of a personalized advertisement.

In this embodiment of the present invention, before the CDN device sends the advertisement content corresponding to the link of the advertisement content to the user terminal (step A4), the CDN device may further update, according to the link of the advertisement content, a playlist file that corresponds to the program playback request, and send the playlist file to the user terminal, so that the user terminal requests the CDN device for media content according to the updated playlist file. It should be noted that, the CDN device may further actively send the advertisement content corresponding to the link of the advertisement content to the user terminal, and the terminal plays the advertisement content.

After receiving the playlist file, the terminal requests the CDN device for corresponding media content according to the playlist file, and the CDN device sends the advertisement content corresponding to the link of the advertisement content to the user terminal, thereby providing a personalized advertisement service for the user.

Referring to FIG. 2, FIG. 2 is a flow chart of a method for updating personalized information of a user according to personalized operation information of playing a program by a user terminal according to an embodiment of the present invention.

In this embodiment of the present invention, after receiving a program playback request of a user terminal, a CDN device may send program content corresponding to the program playback request to the terminal, and the terminal plays the program content. In this embodiment of the present invention, furthermore, personalized information of a user may further be updated according to personalized operation information of the program content of the user terminal, which specifically includes:

B1. A CDN device obtains personalized operation information of playing, by a user through a terminal, program content.

Specifically, in this embodiment of the present invention, the CDN device may obtain the personalized operation information when the user plays the program content through the terminal, for example, operation information such as forwarding and rewinding.

B2. The CDN device updates personalized information of the user according to the personalized operation information of the program content and a preset analysis policy.

Specifically, in this embodiment of the present invention, the personalized information of the user may be updated according to the personalized information of the program content and the preset analysis policy. For example, the user performs a rewinding operation several times during playback of an advertisement, which indicates that the user has a high degree of concern on the program, and the preset analysis policy may be, for example: a program type or keyword corresponding to the program on which the user has a high degree of concern has a high weight in the personalized information of the user. The preset analysis policy may be modified according to an actual requirement.

In this embodiment of the present invention, the CDN device may provide media content acceleration for multiple media servers, and the user always has the same user identifier in the CDN device. Compared with the prior art, in this embodiment of the present invention, personalized operation information of playing program content when a user accesses multiple media servers may be collected, and the personalized information of the user is updated according to the collected personalized operation information, so that the personalized information of the user is more accurate, thereby further improving accuracy of an advertisement obtained according to the personalized information of the user, and improving a delivery effect of a personalized advertisement.

Referring to FIG. 3, FIG. 3 is a flow chart of a method for obtaining a user identifier according to an embodiment of the present invention.

In this embodiment of the present invention, in a case that a program playback request does not carry a user identifier, for example, in a case that a user deletes the user identifier, before a CDN device obtains personalized information of the user according to a corresponding relation between the user identifier and the personalized information (step A2), the CDN device in this embodiment of the present invention may obtain the user identifier of the user, which specifically may include the following steps:

C1. The CDN device queries physical access information or an international mobile subscriber identification of the user according to an IP address carried in the program playback request.

Specifically, when the user accesses the CDN again after deleting the user identifier, the program playback request carries an IP address. In this embodiment of the present invention, a network geography (Network Geo, Network Geography) device is queried for the physical access information or the international mobile subscriber identification (IMSI, International mobile subscriber identification) of the user according to the IP address carried in the program playback request. The physical access information or the international mobile subscriber identification of the user may uniquely indicate the user.

The Network Geo device may be a broadband remote access server (BRAS, Broadband Remote Access Server) or a gateway GPRS supporting node (GGSN, Gateway GPRS Supporting Node), and may also be another device.

C2. The CDN device queries a preset corresponding relation between the physical access information and the user identifier according to the physical access information, or queries a preset corresponding relation between the international mobile subscriber identification and the user identifier according to the international mobile subscriber identification, so as to obtain the user identifier.

Specifically, in this embodiment of the present invention, the CDN device may query the preset corresponding relation between the physical access information and the user identifier according to the physical access information, or query the preset corresponding relation between the international mobile subscriber identification and the user identifier according to the international mobile subscriber identification, so as to obtain the user identifier.

After the CDN device obtains the user identifier of the user according to the IP address, a corresponding relation between the user identifier and the personalized information is queried according to the user identifier to obtain the personalized information of the user, and then the media playback process of steps A3 and A4 starts to be performed, thereby providing a personalized advertisement for the user.

In this embodiment of the present invention, when the user does not carry the user identifier in the playback request, the user identifier of the user may be obtained according to the IP address of the user, so as to obtain the personalized information of the user according to the user identifier, thereby providing a personalized advertisement service for the user, improving a delivery effect of a personalized advertisement, and adapting to more application scenarios.

In this embodiment of the present invention, after obtaining the physical access information or the international mobile subscriber identification of the user, the CDN device may further obtain relevant subscription information of the user from a home location register (HLR, Home Location Register) or a home subscriber server (HSS, Home Subscriber Server) or a user profile server function (USPF, User Profile Server Function) device according to the physical access information or the international mobile subscriber identification. The relevant subscription information of the user may include information such as a gender, an age, an educational level and an occupation of the user. In this embodiment of the present invention, after obtaining the relevant subscription information of the user, the CDN device may add the relevant subscription information into the personalized information of the user, so as to provide more comprehensive personalized information, thereby providing a better targeted advertisement for the user and improving a delivery effect of a personalized advertisement.

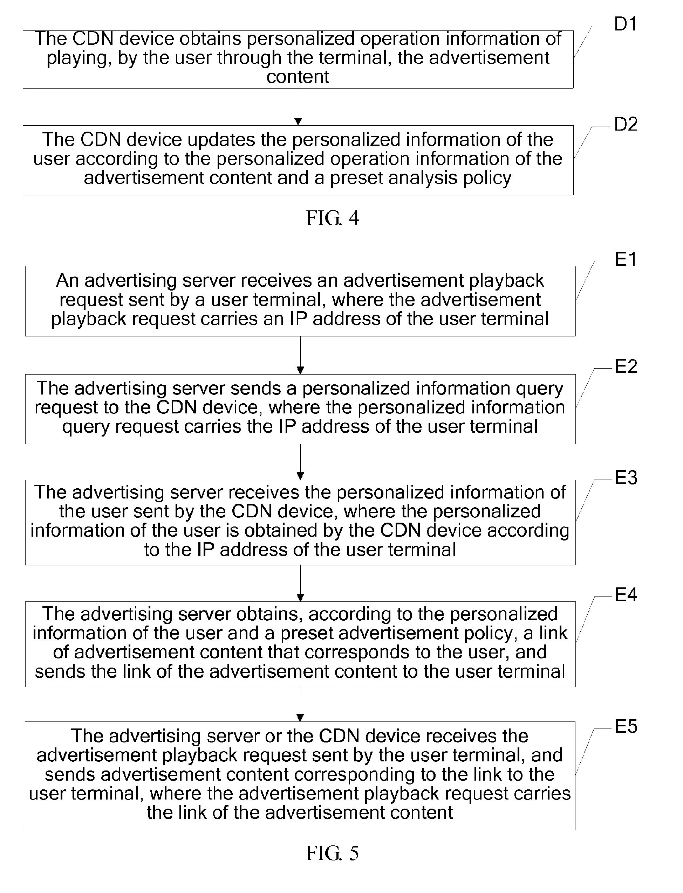

Referring to FIG. 4, FIG. 4 is a flow chart of a method for updating personalized information of a user according to personalized operation information of playing advertisement content by a user terminal according to an embodiment of the present invention.

In the first embodiment of the media playback method of the present invention, after the advertisement content is sent to the user terminal (step A4), the following steps may further be performed.

D1. The CDN device obtains personalized operation information of playing, by the user through the terminal, the advertisement content.

Specifically, the CDN device may obtain the personalized operation information of playing, by the user through the terminal, the advertisement content, for example, operation information such as forwarding and pause.

D2. The CDN device updates the personalized information of the user according to the personalized operation information of the advertisement content and a preset analysis policy.

The CDN device updates the personalized information of the user according to the personalized operation information of the advertisement content and the preset analysis policy.

In this embodiment of the present invention, the CDN device updates the personalized information of the user according to the personalized operation information of the advertisement content, so as to more comprehensively obtain the personalized information of the user, thereby providing a better personalized advertisement service for the user.

Referring to FIG. 5, FIG. 5 is a flow chart of a media playback method according to a second embodiment of the present invention.

In the second embodiment of the present invention, when accessing the Internet through a terminal, a user requests a network side for a media program, and the user operates the terminal to access an ingress device of a CP/SP, for example, a media server. The ingress device may provide an access ingress of the user terminal.

The ingress device returns a corresponding page to the terminal. The page includes a link corresponding to a playlist file. The terminal requests the ingress device for the playlist file according to the link. The ingress device sends the playlist file to the terminal.

The terminal parses the received playlist file, sends a program playback request to a CDN device according to a link of program content in the playlist file, and requests an advertising server for advertisement content according to a link of advertisement content in the playlist file. The media playback method provided by the second embodiment of the present invention specifically includes:

E1. An advertising server receives an advertisement playback request sent by a user terminal, where the advertisement playback request carries an IP address of the user terminal.

Specifically, the advertisement playback request received by the advertising server carries the IP address of the user terminal.

E2. The advertising server sends a personalized information query request to the CDN device, where the personalized information query request carries the IP address of the user terminal.

Specifically, the advertising server needs to obtain personalized information of a user, and therefore sends the personalized information query request to the CDN device, where the personalized information query request carries the IP address of the user terminal.

After receiving the personalized information query request, the CDN device obtains the personalized information of the user according to the IP address of the user terminal, and returns the personalized information of the user to the advertising server.

E3. The advertising server receives the personalized information of the user sent by the CDN device, where the personalized information of the user is obtained by the CDN device according to the IP address of the user terminal.

Specifically, the advertising server receives the personalized information of the user sent by the CDN device. The personalized information of the user is, for example, information such as advertisement content and advertisement length that the user prefers.

E4. The advertising server obtains, according to the personalized information of the user and a preset advertisement policy, a link of advertisement content that corresponds to the user, and sends the link of the advertisement content to the user terminal.

Specifically, the advertising server may obtain, according to the personalized information of the user and the preset advertisement policy, the link of the advertisement content that corresponds to the user, and send the link of the advertisement content that corresponds to the user to the user terminal.

A destination address of the link of the advertisement content that corresponds to the user may be the CDN device, and may also be the advertising server.

For example, the preset advertisement policy in the advertising server may be: selecting an advertisement matching a preference of the user. When learning that the user has the highest degree of concern on automobiles according to the personalized information of the user, the advertising server obtains a link corresponding to an automobile advertisement. Definitely, the preset advertisement policy may also be another policy such as selecting an advertisement matching an age and a personality of the user.

E5. The advertising server or the CDN device receives the advertisement playback request sent by the user terminal, and sends advertisement content corresponding to the link to the user terminal, where the advertisement playback request carries the link of the advertisement content.

Specifically, the advertisement playback request carries the link of the advertisement content. When the destination address of the link of the advertisement content is the CDN device, the CDN device in this embodiment of the present invention sends the advertisement content corresponding to the link of the advertisement content to the terminal, so as to provide an advertisement service for the terminal. When the destination address of the link of the advertisement content is the advertising server, the advertising server sends the advertisement content corresponding to the link of the advertisement content to the terminal, so as to provide the advertisement service for the terminal.

In this embodiment of the present invention, the advertising server queries the CDN device for the personalized information of the user. As the CDN device may provide media content acceleration for multiple media servers, the personalized information in the CDN device may include personalized information when the user accesses the multiple media servers. Compared with the prior art, in this embodiment of the present invention, the personalized information obtained by the advertising server is more comprehensive, so that the advertisement content obtained according to the personalized information is more accurate, thereby improving a delivery effect of a personalized advertisement.

In this embodiment of the present invention, before the advertising server sends the personalized information query request to the CDN device (step E2), the CDN device may receive a program playback request sent by the user terminal. When the program playback request carries a user identifier of the user in the CDN device and the IP address of the user terminal, the CDN device may record a corresponding relation between the user identifier and the IP address of the user terminal.

Furthermore, the CDN device in this embodiment of the present invention receives the personalized information query request that carries the IP address of the user terminal and is sent by the advertising server, queries the corresponding relation between the user identifier and the IP address of the user terminal according to the IP address carried in the personalized information query request to obtain the user identifier of the user, and thereby queries a corresponding relation between the user identifier and the personalized information according to the user identifier to obtain the personalized information of the user and returns the personalized information of the user to the advertising server. In this embodiment of the present invention, the obtaining of the personalized information of the user by the CDN device may be accelerated, so as to increase a media playback speed and improve service experience of the user.

It should be noted that, that the CDN device records the corresponding relation between the user identifier and the IP address of the user terminal, and obtains the user identifier according to the corresponding relation is only an exemplary implementation manner. After receiving the personalized information query request carrying the IP address of the user terminal, the CDN device may query a Network Geo device for physical access information or an international mobile subscriber identification of the user according to the IP address, and obtain the user identifier of the user according to the physical access information or the international mobile subscriber identification. The obtaining process is already described in detail in steps C1 and C2, and the description is not repeated herein.

Furthermore, in this embodiment of the present invention, when the program playback request received by the CDN device does not carry the user identifier, the CDN device queries the Network Geo device for the physical access information or the international mobile subscriber identification of the user according to the IP address carried in the program playback request, and obtains the user identifier of the user according to the physical access information or the international mobile subscriber identification. The obtaining process is already described in detail in steps C1 and C2, and the description is not repeated herein.

In the second embodiment of the present invention, after receiving the program playback request of the user terminal, the CDN device may send program content corresponding to the program playback request to the terminal, and the terminal plays the program content. In the second embodiment of the present invention, the personalized information of the user may further be updated according to personalized operation information of the program content of the user terminal, the specific process is the same as that in steps B1 and B2, and the description is not repeated herein.

In the second embodiment of the present invention, the CDN device may further update the personalized information of the user according to personalized operation information of playing the advertisement content by the user terminal, where the specific process is the same as steps D1 and D2, and the description is not repeated herein.

In the second embodiment of the present invention, after obtaining the physical access information or the international mobile subscriber identification of the user according to the IP address of the user terminal, the CDN device may further query a home location register or a home subscriber server or a user profile server function device for relevant subscription information of the user according to the physical access information or the international mobile subscriber identification, where the relevant subscription information of the user may include information such as a gender, an age, an educational level and an occupation of the user.

After obtaining the relevant subscription information of the user, the CDN device adds the relevant subscription information of the user into the personalized information of the user, so as to provide the more comprehensive personalized information, thereby providing a better targeted advertisement for the user and improving the delivery effect of the personalized advertisement.

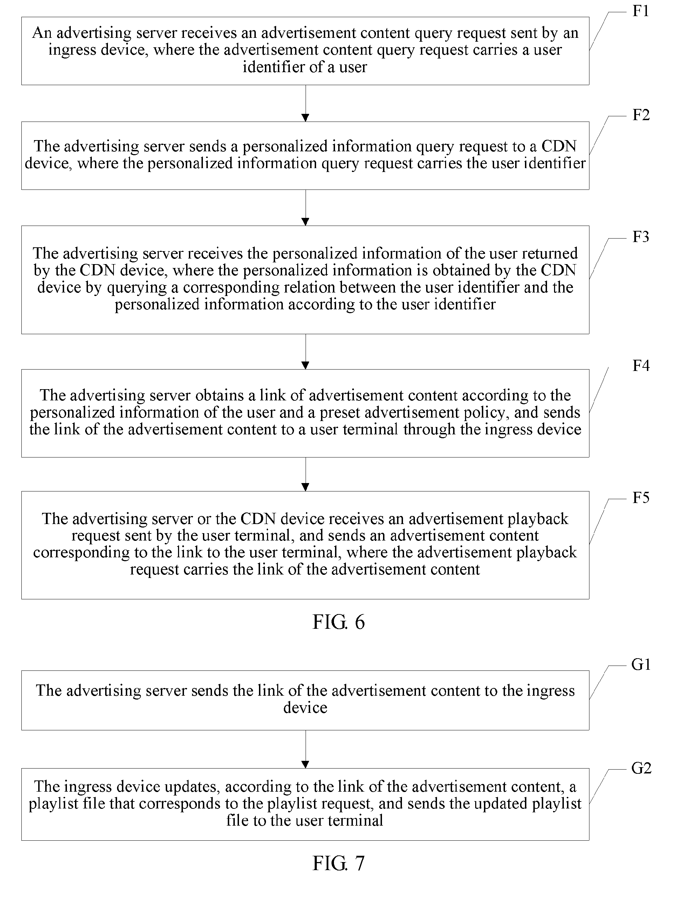

Referring to FIG. 6, FIG. 6 is a flow chart of a media playback method according to a third embodiment of the present invention.

In this embodiment of the present invention, when accessing the Internet through a terminal, a user requests a network side media server for a program, and the user operates the terminal to access an ingress device of a CP/SP. The ingress device returns a corresponding page to the terminal. The page includes a link corresponding to a playlist file. The terminal requests the ingress device for the playlist file according to the link. The ingress device sends an advertisement content query request to an advertising server according to the request. The media playback method provided by this embodiment of the present invention includes:

F1. An advertising server receives an advertisement content query request sent by an ingress device, where the advertisement content query request carries a user identifier of a user.

Specifically, the advertising server receives the advertisement content query request sent by the ingress device, where the advertisement content query request carries the user identifier of the user.

F2. The advertising server sends a personalized information query request to a CDN device, where the personalized information query request carries the user identifier.

Specifically, the advertising server sends the personalized information query request to the CDN device according to the user identifier, where the personalized information query request carries the user identifier.

After receiving the personalized information query request, the CDN device queries a corresponding relation between the user identifier and personalized information according to the user identifier to obtain the personalized information of the user, and returns the personalized information of the user to the advertising server.

F3. The advertising server receives the personalized information of the user returned by the CDN device, where the personalized information is obtained by the CDN device by querying the corresponding relation between the user identifier and the personalized information according to the user identifier.

Specifically, the advertising server receives the personalized information of the user sent by the CDN device, where the personalized information of the user is, for example, information such as advertisement content and advertisement length that the user prefers.

F4. The advertising server obtains a link of advertisement content according to the personalized information of the user and a preset advertisement policy, and sends the link of the advertisement content to a user terminal through the ingress device.

Specifically, the advertising server may obtain, according to the personalized information of the user and the preset advertisement policy, the link of the advertisement content of the user, and send the link of the advertisement content that corresponds to the user to the user terminal through the ingress device.

A destination address of the link of the advertisement content that corresponds to the user may be the CDN device, and may also be the advertising server.

For example, the preset advertisement policy in the advertising server may be: selecting an advertisement matching a preference of the user. After learning that the user has the highest degree of concern on automobiles according to the personalized information of the user, the advertising server obtains a link corresponding to an automobile advertisement. Definitely, the preset advertisement policy may also be another policy such as selecting an advertisement matching an age and a personality of the user.

F5. The advertising server or the CDN device receives an advertisement playback request sent by the user terminal, and sends advertisement content corresponding to the link to the user terminal, where the advertisement playback request carries the link of the advertisement content.

Specifically, the advertisement playback request carries the link of the advertisement content. When the destination address of the link of the advertisement content is the CDN device, the CDN device in this embodiment of the present invention sends the advertisement content corresponding to the link of the advertisement content to the terminal, so as to provide an advertisement service for the terminal. When the destination address of the link of the advertisement content is the advertising server, the advertising server sends the advertisement content corresponding to the link of the advertisement content to the terminal, so as to provide the advertisement service for the terminal.

In the third embodiment of the present invention, the advertising server queries the CDN device for the personalized information of the user. As the CDN device may provide media content acceleration for multiple media servers, the personalized information in the CDN device may include personalized information when the user accesses the multiple media servers. Compared with the prior art, in the third embodiment of the present invention, the personalized information obtained by the advertising server is more comprehensive, so that the advertisement content obtained according to the personalized information is more accurate, thereby improving a delivery effect of a personalized advertisement.

In the third embodiment of the present invention, the ingress device may receive a playlist request sent by the terminal, and redirect the playlist request to the CDN device. In this case, the terminal sends the playlist request to the CDN device, where the playlist request carries address information of the ingress device. In the third embodiment of the present invention, before the advertising server receives the advertisement content query request sent by the ingress device, the CDN device may receive the playlist request of the terminal, where the playlist request carries the address information of the ingress device.

When the playlist request received by the CDN device carries the user identifier of the user in the CDN device, the CDN device redirects the playlist request to the ingress device according to the address information of the ingress device. After receiving the redirected playlist request, the ingress device sends the advertisement content query request to the advertising server according to the user identifier carried in the playlist request, where the advertisement content query request carries the user identifier of the user.

It should be noted that, when the playlist request received by the CDN device does not carry the user identifier of the user in the CDN device, the CDN device may obtain the user identifier of the user according to an IP address carried in the playlist request, and add the user identifier of the user in the playlist request when redirecting the playlist request to the ingress device. The process in which the CDN device obtains the user identifier of the user according to the IP address carried in the playlist request is the same as steps C1 and C2, and the description is not repeated herein.

Referring to FIG. 7, FIG. 7 is a flow chart of a method for sending a link of advertisement content to a user terminal through an ingress device according the third embodiment of the present invention.

In the third embodiment of the present invention, the advertising server sends the link of the advertisement content to the user terminal through the ingress device, which may specifically include:

G1. The advertising server sends the link of the advertisement content to the ingress device.

G2. The ingress device updates the playlist file corresponding to the playlist request according to the link of the advertisement content, and sends the updated playlist file to the user terminal.

Specifically, the ingress device updates the playlist file corresponding to the playlist request according to the link of the advertisement content, and sends the updated playlist file to the user terminal. It should be noted that, the ingress device may also directly send the link of the advertisement content to the user terminal.

In this embodiment of the present invention, the playlist is updated, so as to achieve automatic insertion of the advertisement content, thereby providing a personalized advertisement service for the user.

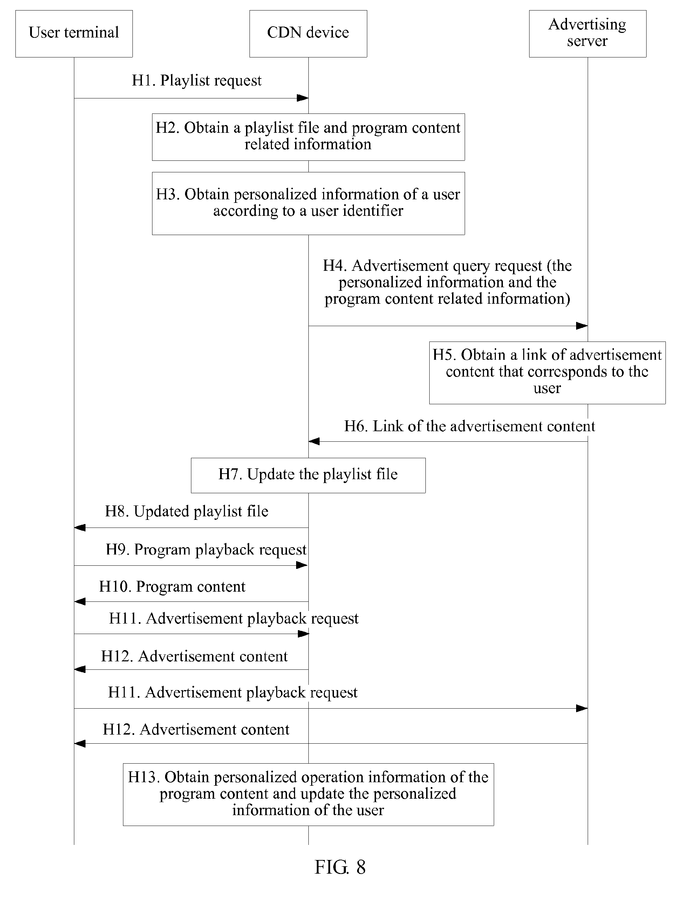

Referring to FIG. 8, FIG. 8 is a flow chart of a media playback method according to a fourth embodiment of the present invention.

In this embodiment of the present invention, when accessing the Internet through a terminal, a user requests a network side server for a program, and the user terminal accesses an ingress device of a CP/SP. The ingress device may be, for example, a media server, and provide an access ingress of the user terminal. The ingress device returns a corresponding page to the terminal. The page includes a link corresponding to a playlist file. The terminal sends a program playlist request according to the link. The media playback method provided by this embodiment of the present invention may include:

H1. Receive a playlist request that is sent through a terminal by a user.

Specifically, a program playback request in this embodiment of the present invention is a playlist request. A CDN device receives the playlist request that is sent through the terminal by the user.

H2. According to the playlist request, obtain a corresponding playlist file and program content related information that corresponds to the playlist file.

Specifically, the playlist request may carry an address of the playlist file. In this embodiment of the present invention, the CDN device may obtain the corresponding playlist file according to the address. Program content corresponding to the playlist file may be stored in the CDN device in advance.

The program content related information may be stored in the CDN device, and may include a description of the program content, for example, a program type: comedy, news, horror, action, romance, and so on, or a keyword description: basketball, swimming, traveling, cosmetic, food, and so on.

H3. When the program playlist request carries a user identifier of the user in the CDN device, query a corresponding relation between the user identifier and personalized information of the user according to the user identifier, so as to obtain the personalized information of the user.

Specifically, if the program playlist request carries the user identifier, it is indicated that this is not the first time that the user accesses the Internet through the CDN. In this embodiment of the present invention, the preset corresponding relation between the user identifier and the personalized information of the user is queried according to the user identifier, so as to obtain the personalized information of the user.

If the program playlist request does not carry the user identifier, the user identifier is obtained according to an IP address carried in the program playlist request. The specific process is already described in steps B1 and B2, and the description is not repeated herein.

H4. The CDN device sends an advertisement query request to an advertising server, where the advertisement query request carries the personalized information and the program content related information that corresponds to the playlist file.

Specifically, in this embodiment of the present invention, after obtaining the personalized information of the user, the CDN device sends the advertisement query request to the advertising server to query advertisement content required to be played to the user.

The advertisement query request carries the personalized information and the program content related information that corresponds to the playlist file.

H5. The advertising server obtains, according to the personalized information and the program content related information that are carried in the advertisement query request and a preset advertisement configuration policy, a link of the advertisement content that corresponds to the user, where a destination address of the link of the advertisement content is the CDN device or the advertising server.

Specifically, after receiving the advertisement query request sent by the CDN device, the advertising server obtains, according to the personalized information and the program content related information that are carried in the advertisement query request and the preset advertisement configuration policy, the link of the advertisement content that corresponds to the user. The destination address of the link of the advertisement content that corresponds to the user may be the CDN device, and may also be the advertising server.

The advertisement configuration policy may include, for example:
(1) selecting, according to a geographical location of the terminal, advertisement content to be played;
(2) selecting, according to time, the advertisement content to be played;
(3) selecting, according to a currently played program, the advertisement content to be played;
(4) selecting, according to charging information of different pieces of advertisement content, the advertisement content to be played; and
(4) selecting, according to preference information of a current user, the advertisement content to be played.

For example, three candidate advertisements correspond to a program A. The three advertisements correspond to food, sport, and automobiles, respectively. The preset advertisement policy is: selecting, according to preference information of a user, the advertisement content to be played. The advertising server learns that the user has the highest degree of concern on automobiles according to the personalized information of the user, and therefore obtains a link corresponding to the automobile advertisement. Definitely, the preset advertisement policy may also be another policy such as selecting an advertisement matching an age and a personality of the user.

H6. The advertising server sends the link of the advertisement content to the CDN device.

H7. The CDN device updates the playlist file according to the link of the advertisement content.

Specifically, after receiving the link of the advertisement content, the CDN device updates, according to the link of the advertisement content, the playlist file that corresponds to the playlist request.

H8. The updated playlist file is sent to the terminal.

The CDN device sends the updated playlist file to the terminal according to the playlist request.

After receiving the updated playlist file, the terminal sends an advertisement playback request to the CDN device or the advertising server according to the link of the advertisement content, and sends the program playback request to the CDN device according to a link of program content.

H9. The CDN device receives the program playback request sent by the terminal.

H10. The CDN device sends program content corresponding to the program playback request to the terminal.

Specifically, in this embodiment of the present invention, the CDN device may send the program content corresponding to the program playback request to the terminal. The program content may be stored in the CDN device, that is, the program content is accelerated through the CDN device, and the CDN device sends the program content to the terminal.

H11. The CDN device or the advertising server receives the advertisement playback request sent by the terminal, where the advertisement playback request carries the link of the advertisement content.

Specifically, when the destination address of the link of the advertisement content is the CDN device, the CDN device receives the advertisement playback request sent by the terminal. When the destination address of the link of the advertisement content is the advertising server, the advertising server receives the advertisement playback request sent by the terminal.

H12. The CDN device or the advertising server sends the advertisement content corresponding to the link of the advertisement content to the terminal.

Specifically, in this embodiment of the present invention, the CDN device or the advertising server sends the advertisement content corresponding to the link of the advertisement content to the terminal, so as to provide the corresponding advertisement service for the terminal.

It should be noted that, steps H9 and H10 of sending the program content to the terminal may be independent, in terms of time slot, from steps H11 and H12 of sending the advertisement content to the terminal. That is, the advertisement content may be sent to the terminal first, and then the program content is sent to the terminal.

H13. Obtain personalized operation information of playing, by the user through the terminal, the program content, and update the personalized information of the user according to the program content related information, the personalized operation information of the program content, and a preset analysis policy.

Specifically, in this embodiment of the present invention, the CDN device may obtain the personalized operation information of playing, by the user through the terminal, the program content, and update the personalized information of the user according to the program content related information, the personalized operation information of the program content, and the preset analysis policy, so that the personalized information of the user is capable of always reflecting a current personalized requirement of the user, thereby providing a better personalized advertisement service for the user.

In this embodiment of the present invention, the playlist file requested by the terminal is updated, so as to play the personalized advertisement to the user. Furthermore, the update process of the playlist file is transparent to the user, and a client requests a corresponding advertisement according to the modified playlist file, so as to achieve automatic insertion of the advertisement content, thereby providing the personalized advertisement service for the user.

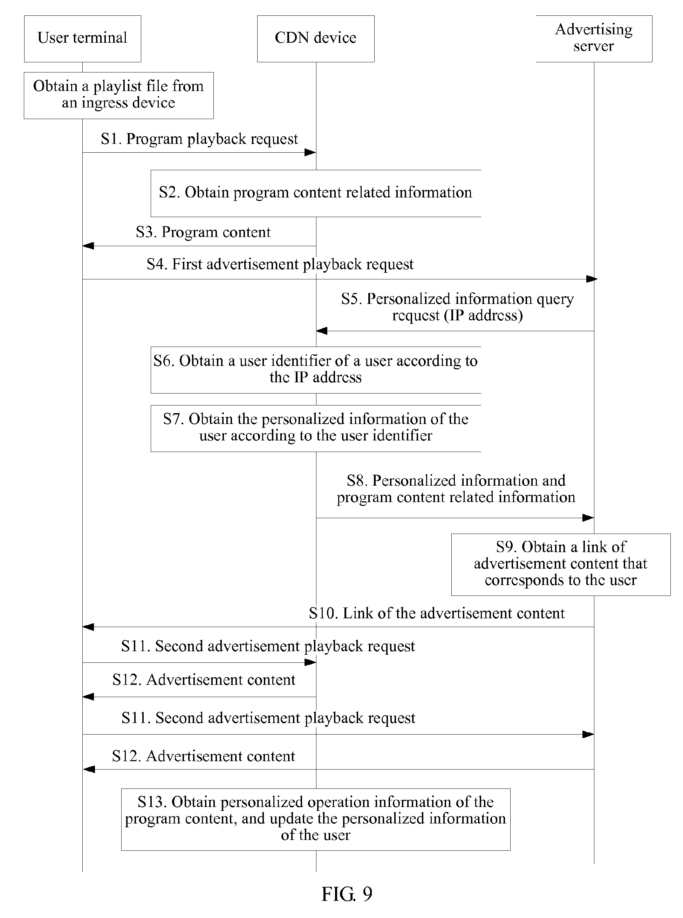

Referring to FIG. 9, FIG. 9 is a flow chart of a media playback method according to a fifth embodiment of the present invention.

In this embodiment of the present invention, when accessing the Internet through a terminal, a user requests a network side for a media program, and the user operates the terminal to access an ingress device of a CP/SP. The ingress device returns a corresponding page to the terminal. The page includes a link corresponding to a playlist file. The terminal requests the ingress device for the playlist file according to the link. The ingress device sends the playlist file to the terminal.

The terminal parses the received playlist file, and requests a CDN for program content according to a link of the program content in the playlist file, that is, sends a program playback request. The media playback method provided by this embodiment of the present invention may include:

S1. A CDN device receives a program playback request sent by a user terminal.

Specifically, the CDN device may receive the program playback request sent by the user terminal. The program playback request may carry a user identifier of a user and an IP address corresponding to the user identifier.

S2. The CDN device obtains program content related information corresponding to the program playback request.

The program content related information may be stored in the CDN device, and may include a description of the program content, for example, a program type: comedy, news, horror, action, romance, and so on, or a keyword description: basketball, swimming, traveling, cosmetic, food, and so on.

S3. The CDN device sends program content corresponding to the program playback request to the terminal.

Specifically, in this embodiment of the present invention, the CDN device may send the program content corresponding to the program playback request to the terminal. The program content may be stored in the CDN device, that is, the program content is accelerated through the CDN device.

The terminal further requests an advertising server for advertisement content according to a link of the advertisement content in the received playlist file, that is, sends a first advertisement playback request.

S4. The advertising server receives the first advertisement playback request sent by the terminal, where the first advertisement playback request carries the IP address of the user.

S5. The advertising server sends a personalized information query request to the CDN device according to the first advertisement playback request, where the personalized information query request carries the IP address.

Specifically, the advertising server needs to obtain, according to the personalized information of the user, the advertisement content required to be played to the user, and therefore sends the personalized information query request to the CDN device according to the first advertisement playback request. The personalized information query request carries the IP address.

S6. The CDN device obtains the user identifier of the user according to the IP address carried in the personalized information query request.

Specifically, the CDN device receives the program playback request in step D1. The program playback request carries the user identifier and the corresponding IP address. After receiving the personalized information query request, the CDN device obtains, according to the IP address carried in the personalized information query request, the user identifier corresponding to the IP address, and then step D6 is performed.

The process in which the CDN device obtains, according to the IP address, the user identifier corresponding to the IP address may be the same as steps C1 and C2, and the description is not repeated herein.

S7. The CDN device queries a preset corresponding relation between the user identifier and the personalized information of the user according to the user identifier, so as to obtain the personalized information of the user.

Specifically, a corresponding relation exists between the personalized information of the user and the user identifier. The personalized information may include an advertisement preference of the user, personal information of the user, and son on, and the advertisement preference may be an advertisement type, advertisement content, and so on. The personalized information of the user may be collected when the user subscribes to an Internet service, and may also be collected when the user accesses the Internet.

Furthermore, in this embodiment of the present invention, the preset corresponding relation between the user identifier and the personalized information of the user is queried according to the user identifier, so as to obtain the personalized information of the user. For the corresponding relation, when the user accesses the Internet, the personalized information of the user may be obtained, and the corresponding relation between the personalized information of the user and the user identifier may be established.

S8. The CDN sends the personalized information of the user and the program content related information that corresponds to the program playback request to the advertising server according to the personalized information query request.

Specifically, the CDN device may return the personalized information of the user and the program content related information that corresponds to the program playback request to the advertising server according to the personalized information query request.

The program content related information may include a description of the program content, for example, a program type: comedy, news, horror, action, romance, and so on, or a keyword description: basketball, swimming, traveling, cosmetic, food, and so on.

It should be noted that, in this embodiment of the present invention, that the CDN device sends the program content related information and the personalized information of the user to the advertising server is only an exemplary implementation manner, and thereby the obtaining, by the CDN device, the program content related information is also an exemplary manner. Alternatively, the CDN device may send only the personalized information of the user to the advertising server, and the advertising server obtains, according to the personalized information of the user and an advertisement configuration policy, the link of the advertisement content required to be played to the user.

S9. The advertising server obtains, according to the personalized information and the program content related information that are carried in the advertisement query request and the preset advertisement configuration policy, the link of the advertisement content that corresponds to the user, where a destination address of the link of the advertisement content is the CDN or the advertising server.

Specifically, after receiving the advertisement query request sent by the CDN device, the advertising server obtains, according to the personalized information and the program content related information that are carried in the advertisement query request and the preset advertisement configuration policy, the link of the advertisement content that corresponds to the user. The destination address of the link of the advertisement content that corresponds to the user may be the CDN device, and may also be the advertising server.

The advertisement configuration policy may include, for example:
(1) selecting, according to a geographical location of the terminal, advertisement content to be played;
(2) selecting, according to time, the advertisement content to be played;
(3) selecting, according to a currently played program, the advertisement content to be played;
(4) selecting, according to charging information of different pieces of advertisement content, the advertisement content to be played; and
(4) selecting, according to preference information of a current user, the advertisement content to be played.

For example, three candidate advertisements correspond to a program A. The three advertisements correspond to food, sport, and automobiles, respectively. The preset advertisement policy is: selecting, according to preference information of a user, the advertisement to be played. The advertising server learns that the user has the highest degree of concern on automobiles according to the personalized information of the user, and therefore obtains a link corresponding to the automobile advertisement. Definitely, the preset advertisement policy may also be another policy such as selecting an advertisement matching an age and a personality of the user.

S10. The advertising server sends the link of the advertisement content to the terminal according to the first advertisement playback request.

Specifically, after receiving the link of the advertisement content, the terminal requests the advertising server or the CDN device for an advertisement content according to the destination address of the link, that is, sends a second advertisement playback request to the CDN or the advertising server.

S11. The CDN device or the advertising server receives the second advertisement playback request sent by the terminal, where the second advertisement playback request carries the link of the advertisement content.

Specifically, when the destination address of the link of the advertisement content is the CDN device, the CDN device receives the second advertisement playback request sent by the terminal. When the destination address of the link of the advertisement content is the advertising server, the advertising server receives the second advertisement playback request sent by the terminal.

S12. The CDN device or the advertising server sends the advertisement content corresponding to the link of the advertisement content to the terminal.

Specifically, in this embodiment of the present invention, the CDN device or the advertising server sends the advertisement content corresponding to the link of the advertisement content to the terminal, so as to provide a corresponding advertisement service for the terminal.

S13. Obtain personalized operation information of playing, by the user through the terminal, the program content, and update the personalized information of the user according to the program content related information, the personalized operation information of the program content, and a preset analysis policy.

Specifically, in this embodiment of the present invention, the CDN device may obtain the personalized operation information of playing, by the user through the terminal, the program content, and update the personalized information of the user according to the program content related information, the personalized operation information of the program content, and the preset analysis policy, so that the personalized information of the user is always capable of reflecting a current personalized requirement of the user, thereby providing a better personalized advertisement service for the user.

In this embodiment of the present invention, the process in which the advertising server determines the actual advertisement content is transparent to the terminal. After receiving a link of reselected advertisement content, the terminal directly requests the advertisement content, so as to achieve automatic insertion of the advertisement, thereby providing the personalized advertisement service for the user.

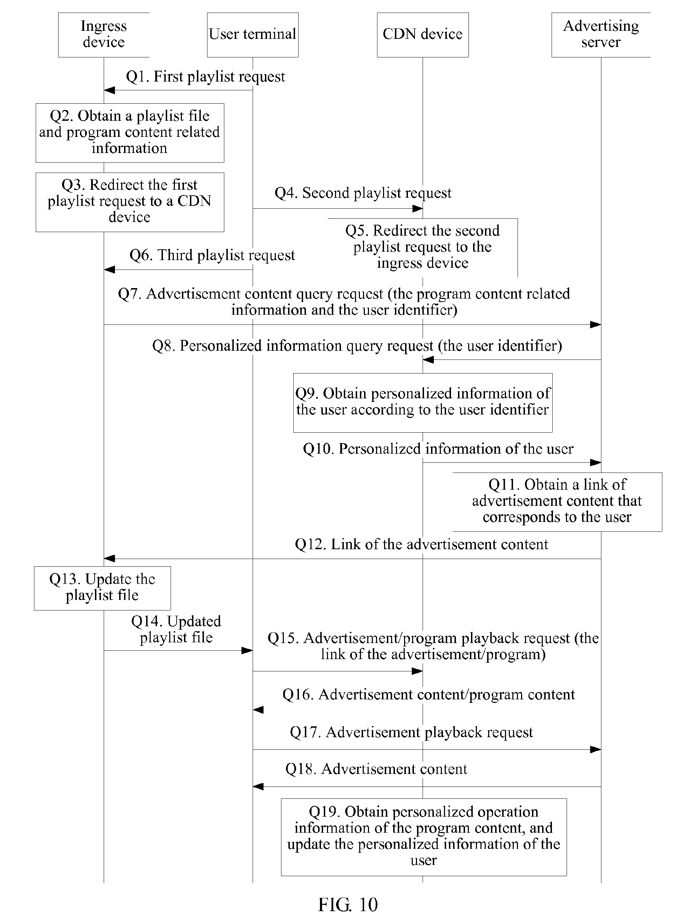

Referring to FIG. 10, FIG. 10 is a flow chart of a media playback method according to a sixth embodiment of the present invention.

In this embodiment of the present invention, when accessing the Internet through a terminal, a user requests a network side server for a program, and the user operates the terminal to access an ingress device of a CP/SP. The ingress device returns a corresponding page to the terminal. The page includes a link corresponding to a playlist file. The terminal requests the ingress device for the playlist file according to the link. That is, the terminal sends a first playlist request to the ingress device to request program content.

Q1. An ingress device receives a first playlist request that is sent through a terminal by a user.

Specifically, the ingress device receives the first playlist request that is sent through the terminal by the user.

Q2. According to the first playlist request, obtain a corresponding playlist file and program content related information that corresponds to the playlist file.

Specifically, the ingress device obtains, according to the first playlist request, the corresponding playlist file and the program content related information that corresponds to the playlist file. In this embodiment of the present invention, the ingress device may store the playlist file that corresponds to the playlist request.

The program content related information may include a description of the program content, for example, a program type: comedy, news, horror, action, romance, and so on or a keyword description: basketball, swimming, traveling, cosmetic, food, and so on.

Q3. The ingress device redirects the first playlist request to a CDN device.

Specifically, the ingress device redirects the first playlist request to the CDN device.

The terminal sends a second playlist request to the CDN device according to the redirected playlist request. If the terminal stores a user identifier of the user, the second playlist request sent to the CDN device may carry the user identifier. If the terminal does not store the user identifier of the user, the second playlist request carries an IP address of the user.

For example, assuming that an original playlist request is http://www.sina.com/c001/playlist, a redirected playlist request is: http://www.cdn.com/www.sina.com/c001/playlist?uid=include.

The second playlist request may carry an identifier of the ingress device, so as to help the CDN device to redirect the second playlist request to the ingress device again.

Q4. The CDN device receives the second playlist request sent by the user terminal.

Q5. The CDN device redirects the second playlist request to the ingress device again.

Specifically, when the second playlist request carries the user identifier, the CDN device redirects the second playlist request to the ingress device again. If the second playlist request message does not carry the user identifier, the corresponding user identifier is obtained according to the IP address of the user, steps C1 and C2 serve as a reference for the detailed process, and the user identifier is sent to the terminal.

It is assumed that the second playlist request sent by the user to the CDN carries the user identifier, for example, Cookie, and the redirected second playlist request is http://www.sina.com/c001/playlist?uid=Cookie_XXX.

The terminal sends a third playlist request to the ingress device according to the redirected second playlist request. The third playlist request carries the user identifier.

Q6. The ingress device receives the third playlist request sent by the user terminal, where the third playlist request carries the user identifier of the user.

Q7. The ingress device sends an advertisement content query request to an advertising server, where the advertisement content query request carries the program content related information that corresponds to the playlist file and the user identifier.

Specifically, in this embodiment of the present invention, the ingress device sends the advertisement content query request to the advertising server, where the advertisement content query request carries the user identifier and the program content related information that corresponds to the playlist file.

Q8. The advertising server sends a personalized information query request to the CDN according to the advertisement content query request, where the personalized information query request carries the user identifier.

Specifically, the advertising server needs to obtain, according to the personalized information of the user, the advertisement content required to be played to the user, and therefore sends the personalized information query request to the CDN device according to the advertisement content query request. The personalized information query request carries the user identifier.

Q9. The CDN device queries a preset corresponding relation between the user identifier and the personalized information of the user according to the user identifier, so as to obtain the personalized information of the user.

Specifically, a corresponding relation exists between the personalized information of the user and the user identifier. The personalized information may include an advertisement preference of the user, personal information of the user, and so on, and the advertisement preferences may be an advertisement type, advertisement content, and so on. The personalized information of the user may be collected when the user subscribes to an Internet service, and may also be collected when the user accesses the Internet.

Furthermore, in this embodiment of the present invention, the preset corresponding relation between the user identifier and the personalized information of the user is queried according to the user identifier, so as to obtain the personalized information of the user. For the corresponding relation, when the user accesses the Internet, the personalized information of the user may be obtained, and the corresponding relation between the personalized information of the user and the user identifier may be established.

Q10. The CDN sends the personalized information of the user to the advertising server.

Specifically, the CDN device sends the personalized information of the user to the advertising server according to the personalized information query request.

Q11. The advertising server obtains, according to the personalized information of the user, the program content related information and a preset advertisement configuration policy, a link of advertisement content that corresponds to the user, where a destination address of the link of the advertisement content is the CDN device or the advertising server.

Specifically, the advertising server obtains, according to the personalized information of the user, the program content related information and the preset advertisement configuration policy, the link of the advertisement content that corresponds to the user. The destination address of the link of the advertisement content that corresponds to the user may be the CDN device or the advertising server.

For example, three candidate advertisements correspond to a program A. The three advertisements correspond to food, sport, and automobiles, respectively. The preset advertisement policy is: selecting an advertisement matching a preference of the user. The advertising server learns that the user has the highest degree of concern on automobiles according to the personalized information of the user, and therefore obtains a link corresponding to the automobile advertisement. Definitely, the preset advertisement policy may also be another policy such as selecting an advertisement matching an age and a personality of the user.

Q12. The advertising server sends the link of the advertisement content to the ingress device.

Q13. The ingress device updates the playlist file according to the link of the advertisement content.

Specifically, after receiving the link of the advertisement content, the ingress device updates, according to the link of the advertisement content, the playlist file that corresponds to the playlist request.

Q14. Send the updated playlist file to the terminal.

Specifically, the ingress device sends the updated playlist file to the terminal according to the playlist request.

After receiving the updated playlist file, the terminal requests media content according to the link in the playlist file. The media content includes the advertisement content and the program content.

Q15. The CDN device receives an advertisement playback request and/or a program playback request sent by the terminal, where the media playback request carries the link of the advertisement content and/or the program content.

Q16. The CDN device sends the corresponding advertisement content and/or program content to the terminal.

Specifically, in this embodiment of the present invention, the CDN device sends the advertisement content that corresponds to the link of the advertisement content and/or the program content corresponding to the link of the program content to the terminal, so as to provide a corresponding media service for the terminal.

In this embodiment of the present invention, if the link of the advertisement content is the advertising server, the terminal sends the advertisement playback request to the advertising server, and the advertising server starts to perform steps E17 and E18.

Q17. The advertising server receives the advertisement playback request sent by the terminal, where the advertisement playback request carries the link of the program content.

Q18. The advertising server sends the corresponding advertisement content to the terminal.

Q19. The CDN device obtains personalized operation information of playing, by the user through the terminal, the program content, updates the personalized information of the user according to the program content related information, the personalized operation information of the program content, and a preset analysis policy.

For steps Q15 to Q18, it should be noted that the advertisement content corresponding to the link may be sent by the advertising server or the CDN device to the user terminal.

Specifically, in this embodiment of the present invention, the CDN device may obtain the personalized operation information of playing, by the user through the terminal, the program content, and update the personalized information of the user according to the program content related information, the personalized operation information of the program content, and the preset analysis policy, so that the personalized information of the user is capable of always reflecting a current personalized requirement of the user, thereby providing a better personalized advertisement service for the user.

In this embodiment of the present invention, the playlist file requested by the terminal is updated, so as to play the personalized advertisement to the user. Furthermore, the update process of the playlist file is transparent to the user, and a client requests a corresponding advertisement according to the modified playlist file, so as to achieve automatic insertion of the advertisement content, thereby providing the personalized advertisement service for the user.

The media playback methods provided by the embodiments of the present invention are described in the foregoing in detail. In the first, the second, the third, the fourth, the fifth and the sixth embodiments of the present invention, the advertising server may be integrated into the CDN device, that is, the CDN device includes a module capable of performing a function of the advertising server, thereby making a networking manner more flexible.

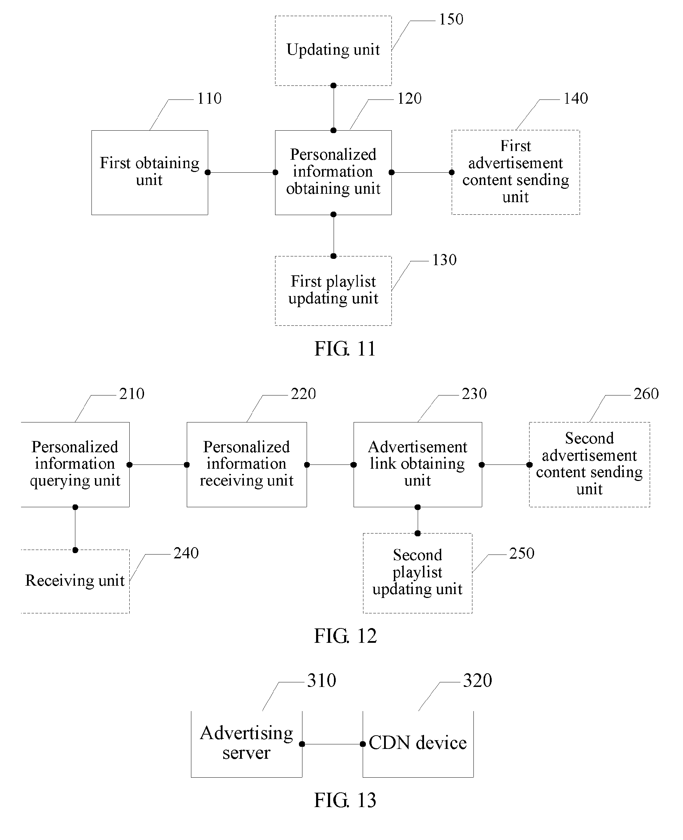

Furthermore, embodiments of the present invention further provide a corresponding content delivery network device and media server. Referring to FIG. 11, FIG. 11 is a schematic structural diagram of a content delivery network device according to a seventh embodiment of the present invention.

The content delivery network device provided by this embodiment of the present invention includes:
a first obtaining unit 110, configured to obtain a user identifier of a user terminal; and
a personalized information obtaining unit 120, configured to query a corresponding relation between the user identifier and personalized information according to the user identifier of the user terminal to obtain the personalized information of a user, and send the personalized information of the user to an advertising server, so that the advertising server obtains a link of advertisement content according to the personalized information of the user and a preset advertisement policy.

The content delivery network device provided by this embodiment of the present invention may be used in the preceding embodiments of the media playback methods. As the CDN device may provide media content acceleration for multiple media servers, and the user always has the same user identifier in the CDN device, the personalized information in the CDN device may include personalized information when the user accesses the multiple media servers. Compared with the prior art, the personalized information of the user provided by this embodiment of the present invention is more comprehensive, so that the advertisement content obtained according to the personalized information of the user in this embodiment of the present invention is more accurate, thereby improving a delivery effect of a personalized advertisement.

The content delivery network device provided by this embodiment of the present invention may further include:
a first playlist update unit 130, configured to receive the link of the advertisement content sent by the advertising server, update a playlist file according to the link of the advertisement content, and send the updated playlist file to the user terminal; and
a first advertisement content sending unit 140, configured to receive the link of the advertisement content sent by the advertising server, and send advertisement content corresponding to the link to the user terminal.

Furthermore, in the content delivery network device of this embodiment of the present invention, the first obtaining unit 110 is specifically configured to receive a program playback request sent by the user terminal, and obtain the user identifier when the program playback request carries the user identifier of the user terminal; or
the first obtaining unit 110 is specifically configured to receive the program playback request sent by the user terminal, query, when the program playback request does not carry the user identifier of the user terminal, physical access information or an international mobile subscriber identification of the user according to an IP address of the user carried in the program playback request, and query a preset corresponding relation between the physical access information and the user identifier according to the physical access information or query a preset corresponding relation between the international mobile subscriber identification and the user identifier according to the international mobile subscriber identification to obtain the user identifier; or
the first obtaining unit 110 is specifically configured to receive a personalized information query request sent by the advertising server, and obtain the user identifier of the user terminal carried in the personalized information query request.

In this embodiment of the content delivery network device, the first obtaining unit 110 is further configured to obtain personalized operation information of playing, by the user terminal, program content. The content delivery network device further includes:
an updating unit 150, configured to update the personalized information of the user according to the personalized operation information that is obtained by the first obtaining unit and a preset analysis policy.

In this embodiment of the content delivery network device, after the first obtaining unit 110 obtains the physical access information or the international mobile subscriber identification of the user, the first obtaining unit 110 is further configured to query a home location register or a home subscriber server or a user profile server function device according to the physical access information or the international mobile subscriber identification of the user to obtain relevant subscription information of the user. The updating unit 150 is further configured to add the relevant subscription information of the user into the personalized information of the user.

Referring to FIG. 12, FIG. 12 is a schematic structural diagram of an advertising server according to an eighth embodiment of the present invention.

The advertising server provided by this embodiment of the present invention may include:
a personalized information querying unit 210, configured to send a personalized information query request to a CDN device, where the personalized information query request carries an IP address or a user identifier of a user terminal;
a personalized information receiving unit 220, configured to receive personalized information of a user sent by the CDN device, where the personalized information of the user is obtained by the CDN device according to the IP address of the user terminal or the user identifier; and
an advertisement link obtaining unit 230, configured to obtain, according to the personalized information of the user and a preset advertisement policy, a link of advertisement content that corresponds to the user.

The advertising server provided by this embodiment of the present invention may further include:
a receiving unit 240, configured to receive an advertisement playback request sent by the user terminal, where the advertisement playback request carries the IP address of the user terminal; or, configured to receive an advertisement content query request sent by an ingress device, where the advertisement content query request carries the user identifier of the user terminal;
a second playlist updating unit 250, configured to update a playlist file according to the link of the advertisement content that corresponds to the user, where the link is obtained by the advertisement link obtaining unit 230, and send the updated playlist file to the user terminal; and
a second advertisement content sending unit 260, configured to send advertisement content corresponding to the link to the user terminal.

The advertising server provided by this embodiment of the present invention may be used in the preceding embodiments of the media playback methods. The advertising server queries the CDN device for the personalized information of the user. As the CDN device may provide media content acceleration for multiple media servers, the personalized information in the CDN device may include personalized information when the user accesses the multiple media servers. Compared with the prior art, in this embodiment of the present invention, the personalized information obtained by the advertising server is more comprehensive, so that the advertisement content obtained according to the personalized information is more accurate, thereby improving a delivery effect of a personalized advertisement.

Furthermore, referring to FIG. 13, FIG. 13 is a schematic structural diagram of a media playback system according to a ninth embodiment of the present invention. The media playback system may include: an advertising server 310 and a CDN device 320.

The advertising server 310 is configured to send a personalized information query request to the CDN device 320, where the personalized information query request carries an IP address of a user terminal or a user identifier.

The CDN device 320 obtains personalized information of a user according to the IP address of the user terminal or the user identifier.

The advertising server 310 is configured to receive the personalized information of the user sent by the CDN device 320, and obtain, according to the personalized information of the user and a preset advertisement policy, a link of advertisement content that corresponds to the user.

The advertising server 310 or the CDN device 320 sends advertisement content corresponding to the link to the user terminal.

The advertising server and the content delivery network device in the media playback system are already described in the corresponding embodiment of the advertising server and the corresponding embodiment of the content delivery network device, and the description is not repeated herein.

It should be noted that, information exchange between units and modules in the system and devices and execution processes are based on the same idea as the method embodiments of the present invention, and therefore the descriptions in the method embodiments of the present invention may serve as a reference for detailed content, which is not repeated herein.

Persons of ordinary skill in the art should understand that, all of or a part of the steps in the methods according to the embodiments may be implemented by a computer program instructing relevant hardware. The program may be stored in a computer readable storage medium. When the program is run, the steps of the methods according to the embodiments are performed. The storage medium may be a magnetic disk, an optical disk, a read-only memory (Read-Only Memory, ROM), a random access memory (Random Access Memory, RAM), and so on.

The media playback method, the media playback system implementing the method, the content delivery network device and the advertising server of the present invention are described in detail in the foregoing. Persons of ordinary skill in the art can make modifications in terms of the specific implementations and application scopes according to the ideas of the embodiments of the present invention. Therefore, the specification shall not be construed as a limitation to the present invention.

## Claims

1. A media playback method, comprising:
receiving, by a content delivery network device, a program playback request sent by a user terminal;
if the program playback request carries a user identifier of a user in the content delivery network device, querying, by the content delivery network device, a corresponding relation between the user identifier and personalized information according to the user identifier to obtain the personalized information of the user;
obtaining, by the content delivery network device, a link of advertisement content that corresponds to the user from an advertising server, wherein the link of the advertisement content is obtained by the advertising server according to the personalized information of the user and a preset advertisement configuration policy; and
sending, by the content delivery network device or the advertising server, advertisement content corresponding to the link of the advertisement content to the user terminal.

2. The media playback method according to claim 1, wherein after the receiving, by the content delivery network device, the program playback request of the user terminal, the method further comprises:
sending, by the content delivery network device, program content corresponding to the program playback request to the user terminal;
obtaining, by the content delivery network device, personalized operation information of playing the program content by the user terminal; and
updating, by the content delivery network device, the personalized information of the user according to the personalized operation information of the program content and a preset analysis policy.

3. The method according to claim 1, wherein if the program playback request does not carry the user identifier of the user in the content delivery network device, before the obtaining, by the content delivery network device, the personalized information of the user according to the corresponding relation between the user identifier and the personalized information, the method further comprises:
querying, by the content delivery network device, physical access information or an international mobile subscriber identification of the user according to an IP address carried in the program playback request; and
querying, by the content delivery network device, a preset corresponding relation between the physical access information and the user identifier according to the physical access information, or querying a preset corresponding relation between the international mobile subscriber identification and the user identifier according to the international mobile subscriber identification, so as to obtain the user identifier.

4. The method according to any one of claims 1 to 3, further comprising:
obtaining, by the content delivery network device, personalized operation information of playing the advertisement content by the user terminal; and
updating, by the content delivery network device, the personalized information of the user according to the personalized operation information of the advertisement content and a preset analysis policy.

5. The method according to claim 1, wherein before the sending, by the content delivery network device, the advertisement content corresponding to the link of the advertisement content to the user terminal, the method comprises:
updating, by the content delivery network device according to the link of the advertisement content, a playlist file corresponding to the program playback request, and sending the playlist file to the user terminal, so that the user terminal requests the content delivery network device for media content according to the updated playlist file.

6. A media playback method, comprising:
receiving, by an advertising server, an advertisement playback request sent by a user terminal, wherein the advertisement playback request carries an IP address of the user terminal;
sending, by the advertising server, a personalized information query request to a content delivery network content delivery network device, wherein the personalized information query request carries the IP address of the user terminal;
receiving, by the advertising server, personalized information of a user sent by the content delivery network device, wherein the personalized information of the user is obtained by the content delivery network device according to the IP address of the user terminal;
obtaining, by the advertising server according to the personalized information of the user and a preset advertisement policy, a link of advertisement content that corresponds to the user, and sending the link of the advertisement content to the user terminal; and
receiving, by the advertising server or the content delivery network device, the advertisement playback request sent by the user terminal, and sending advertisement content corresponding to the link of the advertisement content to the user terminal, wherein the advertisement playback request carries the link of the advertisement content.

7. The method according to claim 6, wherein before the sending, by the advertising server, the personalized information query request to the content delivery network device, the method further comprises:
receiving, by the content delivery network device, a program playback request sent by the user terminal; and
if the program playback request carries a user identifier of the user in the content delivery network device and the IP address of the user terminal, recording, by the content delivery network device, a corresponding relation between the user identifier and the IP address of the user terminal.

8. The method according to claim 7, wherein the personalized information of the user being obtained by the content delivery network device according to the IP address of the user terminal comprises:
querying, by the content delivery network device, a corresponding relation between the user identifier of the user and the IP address of the user terminal according to the IP address to obtain the user identifier of the user in the content delivery network device; and
querying, by the content delivery network device, a corresponding relation between the user identifier and the personalized information according to the user identifier to obtain the personalized information of the user.

9. The method according to claim 7, wherein after the receiving, by the content delivery network device, the program playback request of the user terminal, the method further comprises:
sending, by the content delivery network device, program content corresponding to the program playback request to the user terminal;
obtaining, by the content delivery network device, personalized operation information of playing the program content by the user terminal; and
updating, by the content delivery network device, the personalized information of the user according to the personalized operation information of the program content and a preset analysis policy.

10. The method according to claim 7, wherein if the program playback request does not carry the user identifier of the user in the content delivery network device, before the sending, by the advertising server, the personalized information query request to the content delivery network device, the method further comprises:
querying and obtaining, by the content delivery network device, physical access information or an international mobile subscriber identification of the user according to the IP address carried in the program playback request;
querying, by the content delivery network device, a preset corresponding relation between the physical access information and the user identifier according to the found physical access information, or querying a preset corresponding relation between the international mobile subscriber identification and the user identifier according to the found international mobile subscriber identification, so as to obtain the user identifier; and
recording a corresponding relation between the obtained user identifier and the IP address of the user terminal.

11. The method according to claim 10, wherein after the obtaining, by the content delivery network device, the physical access information or the international mobile subscriber identification of the user, the method further comprises:
querying, by the content delivery network device, a home location register or a home subscriber server or a user profile server function device according to the physical access information or the international mobile subscriber identification to obtain relevant subscription information of the user; and
adding, by the content delivery network device, the relevant subscription information of the user into the personalized information of the user.

12. The method according to any one of claims 6 to 11, further comprising:
obtaining, by the content delivery network device, personalized operation information of playing the advertisement content by the terminal; and
updating, by the content delivery network device, the personalized information of the user according to the personalized operation information of the advertisement content and a preset analysis policy.

13. A media playback method, comprising:
receiving, by an advertising server, an advertisement content query request sent by an ingress device, wherein the advertisement content query request carries a user identifier of a user;
sending, by the advertising server, a personalized information query request to a content delivery network content delivery network device, wherein the personalized information query request carries the user identifier;
receiving, by the advertising server, personalized information of the user returned by the content delivery network device, wherein the personalized information is obtained by the content delivery network device by querying a corresponding relation between the user identifier and the personalized information according to the user identifier;
obtaining, by the advertising server, a link of advertisement content according to the personalized information of the user and a preset advertisement policy, and sending the link of the advertisement content to a user terminal through the ingress device; and
receiving, by the advertising server or the content delivery network device, an advertisement playback request sent by the user terminal, and sending advertisement content corresponding to the link to the user terminal, wherein the advertisement playback request carries the link of the advertisement content.

14. The method according to claim 13, wherein before the receiving, by the advertising server, the advertisement content query request sent by the ingress device, the method further comprises:
receiving, by the content delivery network device, a playlist request of the user terminal, wherein the playlist request carries address information of the ingress device; and
if the playlist request carries the user identifier of the user in the content delivery network device, redirecting, by the content delivery network device, the playlist request to the ingress device according to the address information of the ingress device.

15. The method according to claim 13, wherein the sending the link of the advertisement content to the user terminal through the ingress device comprises:
sending, by the advertising server, the link of the advertisement content to the ingress device; and
updating, by the ingress device, a playlist file corresponding to the playlist request according to the link of the advertisement content, and sending the updated playlist file to the user terminal.

16. A content delivery network device, comprising:
a first obtaining unit, configured to obtain a user identifier of a user terminal; and
a personalized information obtaining unit, configured to query a corresponding relation between the user identifier and personalized information according to the user identifier of the user terminal to obtain the personalized information of a user, and send the personalized information of the user to an advertising server, so that the advertising server obtains a link of advertisement content according to the personalized information of the user and a preset advertisement policy.

17. The content delivery network device according to claim 16, wherein
the first obtaining unit is specifically configured to receive a program playback request sent by the user terminal, and obtain the user identifier if the program playback request carries the user identifier of the user terminal; or,
the first obtaining unit is specifically configured to receive the program playback request sent by the user terminal, query, if the program playback request does not carry the user identifier of the user terminal, physical access information or an international mobile subscriber identification of the user according to an IP address of the user carried in the program playback request, and query a preset corresponding relation between the physical access information and the user identifier according to the physical access information or query a preset corresponding relation between the international mobile subscriber identification and the user identifier according to the international mobile subscriber identification to obtain the user identifier; or,
the first obtaining unit is specifically configured to receive a personalized information query request sent by the advertising server, and obtain the user identifier of the user terminal carried in the personalized information query request.

18. The content delivery network device according to claim 16, wherein the content delivery network device further comprises:
a first playlist updating unit, configured to receive the link of the advertisement content sent by the advertising server, update a playlist file according to the link of the advertisement content, and send the updated playlist file to the user terminal.

19. The content delivery network device according to claim 16, wherein the content delivery network device further comprises:
a first advertisement content sending unit, configured to receive the link of the advertisement content sent by the advertising server, and send advertisement content corresponding to the link to the user terminal.

20. The content delivery network device according to claim 16, wherein
the first obtaining unit is further configured to obtain personalized operation information of playing program content by the user terminal; and
the content delivery network device further comprises:
an updating unit, configured to update the personalized information of the user according to the personalized operation information obtained by the first obtaining unit and a preset analysis policy.

21. The content delivery network device according to claim 17, wherein
after the first obtaining unit obtains the physical access information or the international mobile subscriber identification of the user, the first obtaining unit is further configured to query a home location register or a home subscriber server or a user profile server function device according to the physical access information or the international mobile subscriber identification of the user to obtain relevant subscription information of the user; and
the updating unit is further configured to add the relevant subscription information of the user into the personalized information of the user.

22. An advertising server, comprising:
a personalized information querying unit, configured to send a personalized information query request to a content delivery network content delivery network device, wherein the personalized information query request carries an IP address or a user identifier of a user terminal;
a personalized information receiving unit, configured to receive personalized information of a user sent by the content delivery network device, wherein the personalized information of the user is obtained by the content delivery network device according to the IP address of the user terminal or the user identifier; and
an advertisement link obtaining unit, configured to obtain, according to the personalized information of the user and a preset advertisement policy, a link of advertisement content that corresponds to the user.

23. The advertising server according to claim 22, wherein the advertising server further comprises:
a receiving unit, configured to receive an advertisement playback request sent by the user terminal, wherein the advertisement playback request carries the IP address of the user terminal; or, configured to receive an advertisement content query request sent by an ingress device, wherein the advertisement content query request carries the user identifier of the user terminal.

24. The advertising server according to claim 22, wherein the advertising server further comprises:
a second playlist updating unit, configured to update a playlist file according to the link of the advertisement content that corresponds to the user, wherein the link is obtained by the advertisement link obtaining unit, and send the updated playlist file to the user terminal.

25. The advertising server according to claim 22 or 24, wherein the advertising server further comprises:
a second advertisement content sending unit, configured to send advertisement content corresponding to the link to the user terminal.

26. A media playback system, comprising an advertising server and a content delivery network content delivery network device, wherein
the advertising server is configured to send a personalized information query request to the content delivery network device, wherein the personalized information query request carries an IP address of a user terminal or a user identifier;
the content delivery network device obtains personalized information of a user according to the IP address of the user terminal or the user identifier;
the advertising server is configured to receive the personalized information of the user sent by the content delivery network device, and obtain, according to the personalized information of the user and a preset advertisement policy, a link of advertisement content that corresponds to the user; and
the advertising server or the content delivery network device sends advertisement content corresponding to the link to the user terminal.
